# EUROPEAN PATENT APPLICATION

(11) **EP 4 583 325 A1**
(43) Date of publication of application: **09.07.2025**
(21) Application number: 24835174.4
(22) Date of filing: 04.06.2024
(51) Int. Cl.: H01R 24/40, H01R 9/05, H01R 13/40

(54) **RADIO FREQUENCY COAXIAL CONNECTOR**

(30) Priority: 06.07.2023 CN 202310821470
(71) Applicant: Zhongtian Radio Frequency Cable Co., Ltd, Nantong, Jiangsu 226009 (CN); Jiangsu Zhongtian Technology Co., Ltd., Nantong, Jiangsu 226463 (CN)
(72) Inventor: GU, Wenjie, Nantong, Jiangsu 226009 (CN); JI, Yunfei, Nantong, Jiangsu 226009 (CN); ZHENG, Jianqiu, Nantong, Jiangsu 226009 (CN); WANG, Bin, Nantong, Jiangsu 226009 (CN); ZHAO, Ruijing, Nantong, Jiangsu 226009 (CN); XU, Zongming, Nantong, Jiangsu 226009 (CN); SUN, Xiaorong, Nantong, Jiangsu 226009 (CN)
(74) Representative: Range, Christopher William
(86) International application number: PCT/CN2024/097252
(87) International publication number: WO 2025/007691

(57) **Abstract**

The present application belongs to the technical field of radio frequency connectors. Provided is a radio frequency coaxial connector. A first conical surface is provided at a tail-end step at the rear end of an outer conductor, a second conical surface is provided on an inner side of the front end of a C-shaped open clamp, and after a cable to be connected is connected, the first conical surface and the second conical surface are in contact and abut against each other. **In** the present application, the outer diameter of the C-shaped open clamp with two or more turns is gradually enlarged, which not only improves the cable tensile resistance and intermodulation performance of the connector, but also ensures the coaxially of the connector and the cable. **In** addition, compared with the same design of a plurality of clamps, the radio frequency coaxial connector is more convenient for mounting of the cable to be connected, no large resistance is increased during cable mounting, and it is less prone to causing damage to the clamp or deformation of a conductor in the cable. Moreover, the present application adopts an assembly means, which can be suitable for field mounting operations; and the C-shaped open clamp is designed, such that the radio frequency coaxial connector is extremely compatible with 1-1/4" annular cables produced by different cable manufacturers.

## Description

### Technical Field

The present application relates to the technical field of radio-frequency connectors, and in particular to a radio-frequency coaxial connector.

### Background Art

Radio-frequency (RF) coaxial connectors are indispensable and critical electromechanical components in radio electronic systems, electronic equipment and instrumentation. The RF coaxial connectors not only function as mechanical connections, but also ensure the smooth transmission of electromagnetic signals and electromagnetic energy.

In the prior art, the front shell and the rear shell of the RF coaxial connector are connected through threads. When installing, the front shell is first removed, the cable is inserted, and then the front shell and the rear shell are screwed tightly. However, the existing RF coaxial cable connector has a complex internal structure, low production and assembly efficiency, and poor quality stability during mass production. In addition, due to the deficiencies in connection reliability and coaxiality of the existing RF coaxial cable connector, the inner conductor is prone to rotation during the assembly process, thereby deteriorating the electrical performance of the RF connector. Moreover, since the cables of the same specification may be different in size, when the RF connector is connected with the cable, the cable is clamped either tightly or loosely, causing changes in inductance and capacitance and occurrence of discontinuity, so the electrical performance of the RF connector is affected, and relative sliding or loosening may occur easily. In addition, the inner conductor of the cable to be connected cannot be in close contact with the inner conductor of the connector, and the anti-vibration effect is poor. The electrical performance of the connector is often unstable due to the influence of environmental factors such as vibration on site.

### Summary of the Invention

In view of this, an object of the present application is to provide a radio-frequency coaxial connector.

In a first aspect, an example of the present application provides a radio-frequency coaxial connector, comprising a first inner conductor, a second inner conductor, an insulator, a first outer conductor, a second outer conductor and a cable fixing sleeve installed at a rear end of the second outer conductor, wherein, the first inner conductor and the second inner conductor are both arranged on a central axis of the connector, and a rear end of the first inner conductor is fixedly connected to a front end of the second inner conductor, the rear end of the second inner conductor is fixed with an elastic claw, and the elastic claw is wrapped around the rear end of the second inner conductor, the outer diameter of the front end of the elastic claw is bigger than that of the rear end of the elastic claw; the insulator is arranged between the first outer conductor and the second inner conductor, configured to support and fix the second inner conductor and to form insulation between the second inner conductor and the first outer conductor; a first conical surface is arranged at an end step of the rear end of the first outer conductor, the front end of the second outer conductor is fixed to the inner side of the rear end of the first outer conductor through threaded connection, the front end of the cable fixing sleeve is fixed to the inner side of the rear end of the second outer conductor through threaded connection; an inner wall of the second outer conductor includes a first step surface and a second step surface in sequence from the front end to the rear end, and the inner wall of the cable fixing sleeve is flush with the second step surface after the cable fixing sleeve is fixed to the inside of the second outer conductor; the first step surface is an inclined surface which is higher at the front and lower at the rear, and is provided with at least two mounting grooves, which have the same width and depth, and a clamp is arranged in each of the mounting grooves; the positions of the mounting grooves are successively away from the central axis of the connector along front-to-rear direction, and the outer diameters of the corresponding clamps increase successively from front to rear; a first mounting groove is provided at the frontmost end of the first step surface and the first clamp is arranged in the first mounting groove, a second conical surface is provided in the inner side of the front end of the first clamp, the second conical surface matches with the first conical surface and is able to contact and press against the first conical surface when the second outer conductor is installed to the inner side of the rear end of the first outer conductor.

In some examples, straight knurling is circumferentially provided on an outer side of the rear end of the first inner conductor, the front end of the second inner conductor is provided with a first fixing hole, and the rear end of the first inner conductor is arranged in the first fixing hole by interference fit.

In some examples, the elastic claw comprises a fixing portion and a plurality of elastic portions, the fixing portion is fixed to the rear end of the second inner conductor by upset riveting, one end of the elastic portion is fixedly connected to the fixing portion, and the plurality of elastic portions are arranged at equal intervals along the circumference of the fixing portion; the elastic portion comprises a first elastic segment and a second elastic segment, one end of the first elastic segment is connected to the fixing portion, the other end of the first elastic segment is arranged to be inclined towards the outside of the central axis of the connector and connected to the second elastic segment, the first elastic segments of the plurality of elastic portions form a first conical surface along the circumference of the elastic claw; the second elastic segment has an arc shape that bends first to the outside and then to the inside.

In some examples, a circular through hole that matches the second inner conductor is provided in a center of the insulator, the second inner conductor is arranged in the circular through hole and in interference fit with the insulator, the outer side of the insulator is in interference fit with a step on an inner wall of the first outer conductor; the front side and the rear side of the insulator are both provided with several blind holes, the several blind holes on each side are equally spaced along the circumference of the insulator and the blind holes on both sides are arranged alternately.

In some examples, the clamp is a C-shaped open clamp, which includes an arc-shaped bottom surface and a second conical surface and a third conical surface which are inclined inward on both sides, and several parallel circular grooves with a semicircular cross section are respectively provided on the second conical surface and the third conical surface along the circumference of the C-shaped open clamp 28.

In some examples, a first step portion is provided on the outer wall of the second outer conductor at the rear end of the area where the outer wall is connected to the first outer conductor through threaded connection, the inner wall of the first outer conductor is correspondingly provided with a second step portion, a first seal is arranged in a space enclosed by the first step portion and the second step portion; a third step portion is provided on the inner side of the rear end of the second outer conductor, and a second seal is arranged at the third step portion.

In some examples, a threaded area is provided on the outer wall of the front end of the first outer conductor, or the outer wall of the front end of the first outer conductor is further provided with a threaded sleeve, the threaded sleeve is movably mounted to the front end of the first outer conductor through a clamping ring, and the inner side of the threaded sleeve is provided with a threaded area.

In a second aspect, an example of the present application provides a radio-frequency coaxial connector, comprising a first inner conductor, a second inner conductor, an insulator, a first outer conductor, a second outer conductor and a cable fixing sleeve installed at a rear end of the second outer conductor. The first inner conductor and the second inner conductor are both arranged on a central axis of the connector, and a rear end of the first inner conductor is fixedly connected to a front end of the second inner conductor. The rear end of the second inner conductor is fixed with an elastic claw, and the elastic claw is wrapped around the rear end of the second inner conductor, the outer diameter of the front end of the elastic claw is bigger than that of the rear end of the elastic claw. The insulator is arranged between the first outer conductor and the second inner conductor, configured to support and fix the second inner conductor and to form insulation between the second inner conductor and the first outer conductor. A first conical surface is arranged at an end step of the rear end of the first outer conductor, the front end of the second outer conductor is fixed to the inner side of the rear end of the first outer conductor through threaded connection, the front end of the cable fixing sleeve is fixed to the inner side of the rear end of the second outer conductor through threaded connection. An inner wall of the second outer conductor includes a first step surface and a second step surface in sequence in a direction from the front end to the rear end, and the inner wall of the cable fixing sleeve is flush with the second step surface after the cable fixing sleeve is fixed to the inside of the second outer conductor. The first step surface is parallel to the central axis of the connector and is provided with at least two mounting grooves. A clamp is arranged in each mounting groove. The mounting grooves have the same width, the depths of the mounting grooves increase successively along front-to-rear direction, and the outer diameters of the corresponding clamps increase successively from front to rear. A first mounting groove is provided at the frontmost end of the first step surface, a first clamp is arranged in the first mounting groove, and a second conical surface is provided in the inner side of the front end of the first clamp. The second conical surface matches with the first conical surface and is able to contact and press against the first conical surface when the second outer conductor is installed to the inner side of the rear end of the first outer conductor.

In a third aspect, an example of the present application provides a radio-frequency coaxial connector, comprising a first inner conductor, a second inner conductor, an insulator, a first outer conductor, a second outer conductor and a cable fixing sleeve installed at a rear end of the second outer conductor. The first inner conductor and the second inner conductor are both arranged on the central axis of the connector, and a rear end of the first inner conductor is fixedly connected to a front end of the second inner conductor. The rear end of the second inner conductor is fixed with an elastic claw, and the elastic claw is wrapped around the rear end of the second inner conductor, the outer diameter of the front end of the elastic claw is bigger than that of the rear end of the elastic claw. The insulator is arranged between the first outer conductor and the second inner conductor, configured to support and fix the second inner conductor and to form insulation between the second inner conductor and the first outer conductor. A first conical surface is arranged at an end step of the rear end of the first outer conductor, the front end of the second outer conductor is fixed to the inner side of the rear end of the first outer conductor through threaded connection, the front end of the cable fixing sleeve is fixed to the inner side of the rear end of the second outer conductor through threaded connection. An inner wall of the second outer conductor includes a first step surface and a second step surface in sequence in a direction from the front end to the rear end, and the inner wall of the cable fixing sleeve is flush with the second step surface after the cable fixing sleeve is fixed to the inside of the second outer conductor. The first step surface is parallel to the central axis of the connector and is provided with at least two mounting grooves, and a clamp is arranged in each of the mounting grooves. The volumes of the mounting grooves decrease successively in the front-to-rear direction, and the volumes of the corresponding clamps decrease successively in the front-to-rear direction. A first mounting groove is provided at the frontmost end of the first step surface and a first clamp is arranged in the first mounting groove. The second conical surface is provided in the inner side of the front end of the first clamp, the second conical surface matches with the first conical surface and is able to contact and press against the first conical surface when the second outer conductor is installed to the inner side of the rear end of the first outer conductor.

In a fourth aspect, an example of the present application provides a radio-frequency coaxial connector, comprising a first inner conductor, a second inner conductor, an insulator, a first outer conductor, a second outer conductor and a cable fixing sleeve installed at a rear end of the second outer conductor. The first inner conductor and the second inner conductor are both arranged on the central axis of the connector, and a rear end of the first inner conductor is fixedly connected to a front end of the second inner conductor. The rear end of the second inner conductor is fixed with an elastic claw, and the elastic claw is wrapped around the rear end of the second inner conductor, the outer diameter of the front end of the elastic claw is bigger than that of the rear end of the elastic claw. The insulator is arranged between the first outer conductor and the second inner conductor, configured to support and fix the second inner conductor and to form insulation between the second inner conductor and the first outer conductor. A first conical surface is arranged at an end step of the rear end of the first outer conductor, the front end of the second outer conductor is fixed to the inner side of the rear end of the first outer conductor through threaded connection, the front end of the cable fixing sleeve is fixed to the inner side of the rear end of the second outer conductor through threaded connection. An inner wall of the second outer conductor includes a first step surface and a second step surface in sequence in a direction from the front end to the rear end, and the inner wall of the cable fixing sleeve is flush with the second step surface after the cable fixing sleeve is fixed to the inside of the second outer conductor. The first step surface is an inclined surface which is higher at front and lower at rear, and is provided with a mounting groove which is spirally continuous along the inner wall of the second outer conductor. A conical and spiral clamp is arranged in the mounting groove. The mounting groove is gradually away from the central axis of the connector in a front-to-rear direction, the outer diameter of the corresponding clamp gradually increases in a front-to-rear direction, showing an enlarged conical shape. A second conical surface is provided on the inner side of the front end of the clamp. The second conical surface matches with the first conical surface and is able to contact and press against the first conical surface when the second outer conductor is installed to the inner side of the rear end of the first outer conductor.

Followings are beneficial effects that can be achieved by the present application.

The radio-frequency coaxial connector provided in the present application can be of N type or DIN type, pin type or jack type. An inner core is omitted from the cable fixing structure, and the first conical surface provided at the end step of the rear end of the outer conductor replaces the inner core. The first conical surface divides both the inner conductor and the outer conductor into two segments, i.e., a front segment and a rear segment. The outer conductor has a longer space to receive the cable to be connected, so that the cable is fixed more firmly and is not easy to relatively slide or get loose. The connector includes a clamp and a cable fixing sleeve in the interior, the clamp is arranged on the inner side of the front end of the second inner conductor, and a second conical surface is provided in the inner side of the front end of the clamp. The first conical surface correspondingly matches the second conical surface, the first conical surface and the second conical surface are in contact and bear tightly against each other after the cable to be connected is connected, and the outer diameter of clamp with two or more turns in the present application is gradually enlarged, which not only improves the cable tensile strength and intermodulation performance of the connector, but also ensures the coaxiality of the connector and the cable. In addition, compared with the same design of multiple clamps, it is more convenient to install the cable to be connected. High resistance increase will not occur during cable installing, and it is less prone to causing damage to the clamp or deformation of the inner conductor of the cable. This fixing form and the structural design of the clamp in the present application make the cable connection more secure, and significantly improve the standard retention, mechanical durability, bending resistance, and tensile strength of the cable, and improve strength and endurance distance of the connection mechanism. In addition, the elastic claws arranged at the rear end of the inner conductor can effectively contact the inner conductor of the cable to be connected, and will not cause deformation of the inner conductor of the cable, ensuring good electrical performance. In addition, the present application adopts an assembly method, so that the installation can be performed by using only two wrenches, so it can be suitable for field installation operations. At the same time, the design of clamp with two or more turns makes it highly compatible with 1-1/4" annular cables produced by different cable manufacturers.

By the design of knurling between the first inner conductor and the second inner conductor, the design of knurling between the second inner conductor and the insulator and the design of barbs between the first outer conductor and the insulator, the present application ensures that the insulator does not displace after installation and the inner conductor does not rotate, so as to prevent the electrical performance of the RF connector from being deteriorated due to rotation of the components during the installation process.

In this application, annular grooves are provided in the second conical surface and the third conical surface, and the frontmost C-shaped open clamp is clamped into the trough of the outer conductor of the cable. The frontmost C-shaped open clamp supports the peak of the outer conductor of the cable to closely fit the first conical surface, and the outer conductor of the cable is clamped jointly by the first conical surface and the C-shaped open clamp. The annular grooves have anti-skidding effects, increase friction, make the fixation of the entire connector firmer, so the connector is less prone to relatively sliding or getting loose, thereby improving mechanical and electrical performances of the connector.

In order to make the above-mentioned objects, features and advantages of this application more distinct and easy to understand, preferred examples are set forth in the following and described in detail in the following in conjunction with the accompanying drawings.

### Brief Description of Drawings

In order to more clearly illustrate technical solutions of examples of the present application, drawings used in examples will be briefly introduced in the following. It should be understood that the following drawings only show certain examples of the present application and should not be regarded as limitation to the scope. Those skilled in the art can obtain other related drawings based on these drawings without paying creative work.
FIG. 1 shows a first structural schematic diagram of a N-type RF coaxial jack connector of the present application;
FIG. 2 shows a cross-sectional structural schematic diagram of an insulator in the present application;
FIG. 3 shows an enlarged structural schematic diagram of the circular area in FIG. 1;
FIG. 4 shows a second structural schematic diagram of a N-type RF coaxial jack connector of the present application;
FIG. 5 shows a third structural schematic diagram of a N-type RF coaxial jack connector of the present application;
FIG. 6 shows a structural schematic diagram of a C-shaped open clamp in conical spiral shape of the present application;
FIG. 7 shows a first structural schematic diagram of a N-type RF coaxial pin connector of the present application;
FIG. 8 shows a second structural schematic diagram of a N-type RF coaxial pin connector of the present application;
FIG. 9 shows a third structural schematic diagram of a N-type RF coaxial pin connector of the present application;
FIG. 10 shows a first structural schematic diagram of a DIN-type RF coaxial pin connector of the present application;
FIG. 11 shows a second structural schematic diagram of a DIN-type RF coaxial pin connector of the present application;
FIG. 12 shows a third structural schematic diagram of a DIN-type RF coaxial pin connector of the present application.

In figures: 1 - first inner conductor, 2 - second inner conductor, 3 - first outer conductor, 4 - second outer conductor, 5 - cable fixing sleeve, 6 - elastic claw, 7 - fixing portion, 8 - elastic portion, 9 - first elastic segment, 10 - second elastic segment, 11 - threaded area, 12 - insulator, 13 - positioning protrusion, 14 - end step, 15 - recessed groove, 16 - first conical surface, 17 - jack, 18 - circular through hole, 19 - blind hole, 20 - first step portion, 21 - second step portion, 22 - first seal, 23 - third step portion, 24 - second seal, 25 - first step surface, 26 - second step surface, 27 - mounting groove, 28 - C-shaped open clamp, 29 - second conical surface, 30 - third conical surface, 31 - arc bottom surface, 32 - circular groove, 33 - threaded sleeve, 34 - step-shaped protrusion, 35 - sealing gasket, 36 - clamping ring, 37 - first clamping ring groove, 38 - second clamping ring groove, 39 - third seal.

### Embodiments

In the specification, claims and the accompanying drawings of the present application, the term "comprising" is synonymous with "including", "containing" or "characterized by", includes end points or is open-ended and does not exclude additional elements or method steps that are not recited. "Comprising" is a technical term used in the claim language, meaning that said elements are present, but other elements may also be added and still form a structure or method within the scope of the claim.

It should be noted that similar numbers and letters represent similar items in the following drawings. Therefore, once an item is defined in one drawing, it does not need to be further defined and explained in subsequent drawings. In addition, the terms "first", "second", "third", etc. are only used to distinguish descriptions and cannot be understood as indicating or implying relative importance. The term "about" in this application means including a small change, up to +/-10%, from the stated value.

The present application intends to solve the following problems: the existing connectors in the prior art have complex internal structures, low production and assembly efficiency; the internal conductors are prone to rotating during assembly, thereby deteriorating the electrical performance of the RF connector; in addition, the cables of the same specification may have different size, when the RF connector is connected with cables, cables are clamped tightly or loosely, causing changes in inductance and capacitance and discontinuity, affecting the electrical performance of the RF connector, making it easy for the RF connector to relatively slide or get loosen; in addition, the inner conductor of the cable to be connected cannot closely contact with the inner conductor of the connector, and the anti-vibration effect is poor; the electrical performance of the connector is often unstable due to the influence of environmental factors such as vibration on site.

An example of the present application provides a radio-frequency coaxial connector, comprising a first inner conductor, a second inner conductor, an insulator, a first outer conductor, a second outer conductor and a cable fixing sleeve installed at a rear end of the second outer conductor. The first inner conductor and the second inner conductor are both arranged on the central axis of the connector, and a rear end of the first inner conductor is fixedly connected to a front end of the second inner conductor. The rear end of the second inner conductor is fixed with an elastic claw, and the elastic claw is wrapped around the rear end of the second inner conductor, the outer diameter of the front end of the elastic claw is bigger than that of the rear end of the elastic claw. The insulator is arranged between the first outer conductor and the second inner conductor, configured to support and fix the second inner conductor and to form insulation between the second inner conductor and the first outer conductor. A first conical surface is arranged at an end step of the rear end of the first outer conductor, the front end of the second outer conductor is fixed to the inner side of the rear end of the first outer conductor through threaded connection, the front end of the cable fixing sleeve is fixed to the inner side of the rear end of the second outer conductor through threaded connection. An inner wall of the second outer conductor includes a first step surface and a second step surface in sequence in a direction from the front end to the rear end, and the inner wall of the cable fixing sleeve is flush with the second step surface after the cable fixing sleeve is fixed to the inside of the second outer conductor. The first step surface is an inclined surface which is higher at the front and lower at the rear, and the first step surface is provided with at least two mounting grooves. The mounting grooves have the same width and depth, a clamp is arranged in each of the mounting grooves. The mounting grooves are successively away from the central axis of the connector along the front-to-rear direction, and the outer diameters of the corresponding clamps increase successively from front to rear. A first mounting groove is provided at the frontmost end of the first step surface and the first clamp is arranged in the first mounting groove. A second conical surface is provided in the inner side of the front end of the first clamp, the second conical surface matches with the first conical surface and is able to contact and press against the first conical surface when the second outer conductor is installed to the inner side of the rear end of the first outer conductor.

The radio-frequency coaxial connector provided in the present application can be of N type or DIN type, pin type or jack type. An inner core is omitted from the fixed structure of cable, and the first conical surface provided at the end step of the rear end of the outer conductor replaces the inner core. The first conical surface divides the inner conductor and the outer conductor into two segments, i.e., a front segment and a rear segment. The outer conductor has a longer space to receive the cable to be connected, so that the cable is fixed more firmly and is not easy to relatively slide or get loosen. The connector includes a clamp and a cable fixing sleeve in the interior, the frontmost clamp is arranged in the inner side of the front end of the second inner conductor, and a second conical surface is provided in the inner side of the front end of the frontmost clamp. The first conical surface correspondingly matches the second conical surface, the first conical surface and the second conical surface are in contact with and tightly bear against each other after the cable to be connected is connected, and the outer diameter of clamp with two or more turns in the present application is gradually enlarged, which not only improves the cable tensile strength and intermodulation performance of the connector, but also ensures the coaxiality of the connector and the cable. In addition, compared with the same design of multiple clamps, it is more convenient to install the cable to be connected. High resistance increase will not occur during cable installing, and it is less prone to causing damage to the clamp or deformation of the inner conductor of the cable. This fixing form and the structural design of the clamp in the present application make the cable connection more secure, and significantly improve the standard retention, mechanical durability, bending resistance, and tensile strength of the cable, and improve strength and endurance distance of the connection mechanism. In addition, the elastic claws arranged at the rear end of the inner conductor can effectively contact the inner conductor of the cable to be connected, and will not cause deformation of the inner conductor of the cable, ensuring good electrical performance. In addition, the present application adopts an assembly method, so that the installation can be performed by using only two wrenches, so it can be suitable for field installation operations. At the same time, the design of C-shaped open clamp makes it highly compatible with 1-1/4" annular cables produced by different cable manufacturers.

By the design of knurling between the first inner conductor and the second inner conductor, the design of knurling between the second inner conductor and the insulator and the design of barbs between the first outer conductor and the insulator, the present application ensures that the insulator does not displace after installation and the inner conductor does not rotate, so as to prevent the electrical performance of the RF connector from being deteriorated due to rotation of the components during the installation process.

In this application, annular grooves are provided in the second conical surface and the third conical surface, and the frontmost C-shaped open clamp is clamped into the trough of the outer conductor of the cable. The frontmost C-shaped open clamp supports the peak of the outer conductor of the cable to closely fit the first conical surface, and the outer conductor of the cable is clamped jointly by the first conical surface and the C-shaped open clamp. The annular grooves have anti-skidding effects, increase friction, make the fixation of entire connector firmer, so that the connector is less prone to relatively sliding or getting loose, thereby improving mechanical and electrical performances of the connector.

The technical solutions of examples of the present application will be described clearly and completely in the following in conjunction with the drawings for the examples of the present application. Apparently, the described examples are a part of the examples of the present application but not all of the examples. Based on examples of the present application, all other examples obtained by those of ordinary skill in the art without paying creative work are within the protection scope of the present application.

The reference to "example" in this application means that the specific features, structures or characteristics described in combination with the examples can be included in at least one example of this application. The appearance of this phrase in various places in the specification does not necessarily refer to the same example, nor is it an independent or alternative example that is mutually exclusive with other examples. It is explicitly and implicitly understood by those skilled in the art that the examples described in this application can be combined with other examples.

### Example 1

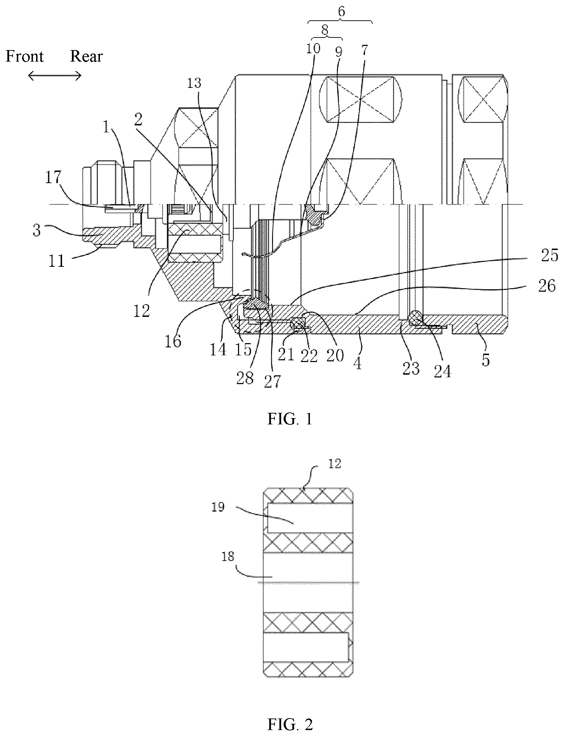

The present application provides a N-type radio-frequency coaxial jack connector for matching 1-1/4" annular cable, as shown in FIG. 1. The structure of the connector in this example is described according to the front-to-rear direction that is marked by the coordinates in FIG. 1 (the following applies), wherein an outer conductor is at the front end, and the cable fixing sleeve is at the rear end. The connector includes a first inner conductor 1, a second inner conductor 2, a first outer conductor 3, a second outer conductor 4 and a cable fixing sleeve 5 installed at a rear end of the second outer conductor 4. The first inner conductor 1 and the second inner conductor 2 are both arranged on the central axis of the connector. Straight knurling is provided circumferentially on an outer side of a rear end of the first inner conductor 1. A front end of the second inner conductor 2 is provided with a first fixing hole. The rear end of the first inner conductor 1 is press-fitted and installed in the first fixing hole by interference fit, so as to fixedly connect the first inner conductor 1 and the second inner conductor 2. A rear end of the second inner conductor 2 is fixed with an elastic claw 6 by upset riveting and the elastic claw 6 is firmly press-fitted to ensure stability. The outer diameter of the front end of the elastic claw 6 is bigger than that of the rear end of the elastic claw, and when this connector is installed to the cable, the elastic claw 6 will effectively contact the inner conductor after the elastic claw 6 is inserted into the inner conductor of the cable, without causing deformation of the inner conductor of the cable, so as to ensure good electrical performance.

As shown in FIG. 1, the elastic claw 6 includes a fixing portion 7 and a plurality of elastic portions 8. The fixing portion 7 is fixed to the rear end of the second inner conductor 2 by upset riveting, one end of the elastic portion 8 is fixedly connected to the fixing portion 7, and the plurality of elastic portions 8 is evenly distributed along the circumference of the fixing portion 7. The elastic portion 8 has a first elastic segment 9 and a second elastic segment 10, one end of the first elastic segment 9 is connected to the fixing portion 7, and the other end of the first elastic segment 9 is arranged obliquely toward the outside of the central axis and is connected with the second elastic segment 10. The second elastic segment 10 has an arc shape that protrudes toward the outside of the central axis.

In this example, the elastic portion 8 can be an elastic bar having a first elastic segment 9 and a second elastic segment 10 connected in sequence. The first elastic segments 9 of the plurality of elastic portions 8 form a first conical surface along the circumference of the elastic claw 6. The second elastic segment 10 has an arc shape that bends first to the outside and then to the inside. The arc shape design protruding outside of the second elastic segment 10 of the elastic portion 8 provides the elastic claw 6 with good elastic performance to ensure close contact with the inner conductor of the cable.

The front end of the first inner conductor 1 is provided with a jack 17, and the rear end is provided with a straight knurling along the circumferential outer side. The jack 17 is configured to receive a male plug (a pin) when the other connector is connected. In addition, there are 4 to 8 slots provided in the circumferential wall of the jack, which allows expansion of the jack diameter to a certain extent within a certain tolerance range, so that the pin is inserted more easily. For example, in some examples, the number of the slots may be 4, 5, 6, 7 or 8.

The outer conductor includes a first outer conductor 3 and a second outer conductor 4, and a rear end of the first outer conductor 3 is fixed with a front end of the second outer conductor 4 through threaded connection. A threaded area 11 is designed on the outer wall of a front end of the first outer conductor 3, and configured for threaded connection with another connector, and the inner side of the first outer conductor 3 as a whole has a step design.

The insulator 12 is arranged between the first outer conductor 3 and the second inner conductor 2, is configured to support and fix the inner conductor, and forms insulation between the inner conductor and the first outer conductor 3. A circle of positioning protrusions 13 are provided on the outer periphery of the second inner conductor 2, and a front end of the insulator 12 is positioned by the steps in the inner side of the first outer conductor 3. A rear end of the insulator 12 is limited by the positioning protrusions 13 on the outer side of the circumference of the second inner conductor 2, so as to limit and fix the insulator 12. Inward recessed groove 15 and first conical surface 16 are arranged at an end step 14 of the rear end of the first outer conductor 3, wherein, the side wall of the recessed groove 15 adjacent to the central axis of the connector forms the first conical surface 16, and the first conical surface 16 gradually approaches the central axis of the connector in the direction from the first outer conductor 3 to the second inner conductor 2, that is, in the front-to-rear direction in FIG. 1.

As shown in FIG. 2, a circular through hole 18 matching the second inner conductor 2 is provided in the center of the insulator 12, and the second inner conductor 2 is arranged in the circular through hole 18 to be in interference fit with the insulator 12. The outer side surface of the insulator 12 is in interference fit with the step of the inner wall of the first outer conductor 3. A plurality of blind holes 19 are provided on one side of the front side and rear side of the insulator 12, and the same number of blind holes 19 are provided on the other side of the insulator 12. The blind holes 19 on both sides of the insulator 12 are arranged along the axis direction of the insulator 12, the plurality of blind holes 19 on each side are distributed at equal interval along the circumference of the insulator 12 and the blind holes 19 on the two sides are provided in a staggered manner. For example, in this example, blind holes are provided on the two sides of the insulator 12 in a staggered manner and three blind holes are provided on each end face, which can effectively reduce the dielectric constant of the insulator and increase the use frequency of the connector.

In some examples, a knurling can be provided on the outer surface of the second inner conductor 2 at the connection portion with the insulator 12, which can effectively prevent the second inner conductor 2 from rotating and displacing after the second inner conductor 2 and the insulator 12 are installed. At least partial steps in the inner wall of the first outer conductor 3 is provided with barbs to ensure that the insulator does not displace after being installed.

An external thread is provided on the outer wall of the front end of the second outer conductor 4, and an internal thread is provided on the inner wall of the rear end of the first outer conductor 3. The front end of the second outer conductor 4 is fixed to the inner side of the rear end of the first outer conductor 3 through threaded connection. A first step portion 20 is provided on the outer wall of the second outer conductor 4 at the rear end of the connection area where the first outer conductor 3 is connected with the outer wall through threaded connection. A second step portion 21 is correspondingly provided on the inner wall of the first outer conductor 3. A first seal 22 is arranged in a space enclosed by the first step portion 20 and the second step portion 21. The first seal 22 seals the threaded connection between the first outer conductor 3 and the second outer conductor 4, to prevent rainwater from seeping into the interior of the connector through gap.

A third step portion 23 is provided on the inner side of the rear end of the second outer conductor 4, an external thread is provided on the outer side of the front end of the cable fixing sleeve 5, an internal thread is provided in the inner side of the rear end of the second outer conductor 4, and the front end of the cable fixing sleeve 5 is fixed to the inner side of the rear end of the second outer conductor 4 through threaded connection. A second seal 24 is arranged at the third step portion 23. In the process of the cable fixing sleeve 5 being threadedly connected to the second outer conductor 4, the front end of the cable fixing sleeve 5 squeezes the second seal 24 so as to seal the threaded connection between the two, thereby preventing rainwater from penetrating into the interior of the connector through the gap. The rear end of the cable fixing sleeve 5 extends out of the second outer conductor 4, and the inner wall of the second outer conductor 4 includes a first step surface 25 and a second step surface 26 in sequence in a direction from the front end to the rear end. After the cable fixing sleeve 5 is fixed to the interior of the second outer conductor 4, the inner wall of the cable fixing sleeve 5 close to the central axis of the connector is flush with the second step surface 26.

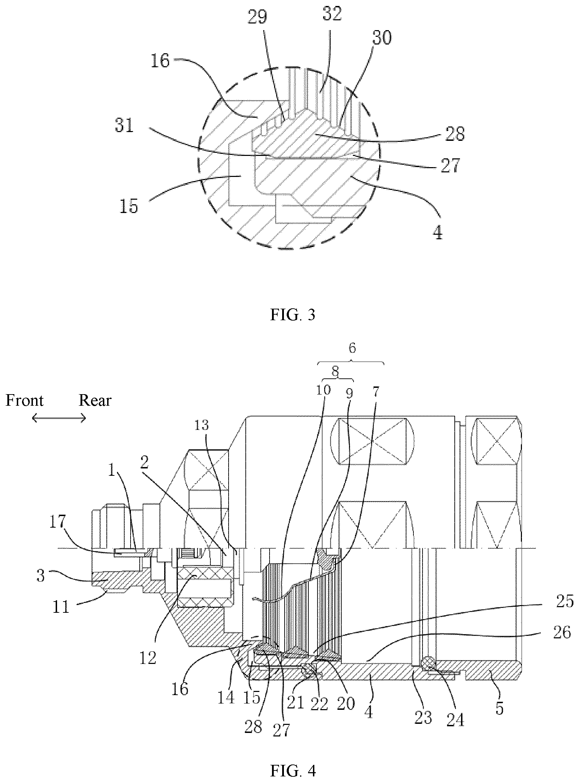

The frontmost end of the first step surface 25 is provided with a mounting groove 27, and the C-shaped open clamp 28 is mounted in the mounting groove 27. As shown in the partial enlarged view in FIG. 3, the C-shaped open clamp 28 is annular as a whole, with the outer side being an arc-shaped protrusion (i.e., C-shaped) and the inner side being two connected conical surfaces, including an arc-shaped bottom surface 31, a second conical surface 29 and a third conical surface 30 inclined inward on both sides. Several parallel annular grooves 32 with semicircular cross-sections are respectively provided on the second conical surface 29 and the third conical surface 30 along the circumference of the C-shaped open clamp 28. The second conical surface 29 matches with the first conical surface 16 at the end step 14 of the rear end of the first outer conductor 3. When the second outer conductor 4 is installed to the inner side of the rear end of the first outer conductor 3 for connecting the cable to be connected, as the second outer conductor 4 rotates forward, the second conical surface 29 of the C-shaped open clamp 28 contacts and presses against the first conical surface 16, and the C-shaped open clamp is clamped into the trough of the outer conductor of the cable. The C-shaped open clamp supports the peak of the outer conductor of the cable and tightly abuts against the first conical surface 16. The outer conductor of the cable is clamped jointly by the first conical surface 16 and the C-shaped open clamp, so that the C-shaped open clamp 28 firmly fixes the outer conductor of the cable to be connected, thereby firmly fixing the cable to be connected. At the same time, the annular grooves 32 on the second conical surface 29 and the third conical surface 30 have anti-skidding effects, increase friction, make the entire connector more firmly fixed and not easy to relatively slide or release, thereby improving the mechanical and electrical properties of the connector. This fixing form and the structural design of the C-shaped open clamp 28 make the cable connection more secure, significantly improve the cable's standard retention, mechanical durability, bending resistance and tensile strength, and improve strength and endurance distance of the connection mechanism.

In some examples, two or more mounting grooves 27 are provided on the first step surface 25, and a C-shaped open clamp 28 is provided in each mounting groove 27. Specifically, the frontmost end of the first step surface 25 is provided with a first mounting groove, and the first C-shaped open clamp 28 is arranged in the first mounting groove. The second conical surface provided in the inner side of the front end of the first C-shaped open clamp 28 matches with the first conical surface. The second conical surface of the first C-shaped open clamp 28 can contact and press against the first conical surface when the second outer conductor is installed on the inner side of the rear end of the first outer conductor.

In the RF coaxial connector of the present application, during the manufacturing process, the insulator is first press-fitted onto the second inner conductor 2, and then the first inner conductor 1 and the second inner conductor 2 are press-fitted together, and the elastic claw 6 is press-riveted at the rear end, and then the assembly of the insulator and the inner conductors is press-fitted in the first outer conductor 3. The insulator 12 is positioned by the step in the first outer conductor 3 and the positioning protrusion 13 on the second inner conductor 2, and then the second outer conductor 4 and the C-shaped open clamp 28 are installed at the rear end of the first outer conductor 3. After the second outer conductor 4 is threadedly installed with the first outer conductor 3, the second conical surface 29 in the C-shaped open clamp 28 can abut the first conical surface 16, and finally the cable fixing sleeve 5 is threadedly installed on the second outer conductor 4.

### Example 2

In this Example 2, in order to improve the electrical and mechanical properties of the connector after being connected to the cable, the C-shaped open clamp 28 and the mounting structure are further improved. As shown in FIG. 4, the first step surface 25 of the second outer conductor 4 is configured as an inclined surface which is higher at front and lower at rear. More than one mounting grooves 27 are provided in the first step surface 25, and the mounting grooves 27 are of the same width and depth. More than one C-shaped open clamps 28 are sequentially mounted in the mounting grooves 27. The positions of the mounting grooves 27 in front-to-rear direction are gradually outward along the radial direction of the second outer conductor 4, and the outer diameters of the corresponding C-shaped open clamps 28 successively increase from the front to the rear.

For example, in this example, the first step surface 25 is provided as an inclined surface which is higher at front and lower at rear. The first step surface 25 is provided with three mounting grooves 27, which are a first mounting groove, a second mounting groove and a third mounting groove from the front to the rear, respectively. The three mounting grooves are of the same width and depth. A C-shaped open clamp 28 is arranged in each mounting groove 27, and the three C-shaped open clamps are a first C-shaped open clamp, a second C-shaped open clamp, and a third C-shaped open clamp from the front to the rear, respectively. The first mounting groove, the second mounting groove and the third mounting groove are successively away from the central axis of the connector, and the outer diameters of the first C-shaped open clamp, the second C-shaped open clamp, and the third C-shaped open clamp are successively increased.

During cable connection of the connector of this example, the first C-shaped open clamp is clamped in the first trough of the outer conductor of the cable at the frontmost end. The first C-shaped open clamp supports the peak of the outer conductor of the cable to be tightly attached to the first conical surface 16. The outer conductor of the cable is clamped jointly by the first conical surface 16 and the first C-shaped open clamp, which plays a role of fixing the cable and ensuring bearing against the conical surface of the outer conductor of the connector. The second C-shaped open clamp is supported in the second trough of the outer conductor of the cable to wrap around the cable peak and increase the contact area between the connector and the outer conductor of the cable, thereby improving the intermodulation performance. The third C-shaped open clamp is supported in the third trough of the outer conductor of the cable to wrap around the cable peak, or the third C-shaped open clamp wraps around the cable protecting sleeve to increase friction. The third C-shaped open clamp further improves the connector's ability to resist stretching of the cable. The outer diameters of the three C-shaped open clamps gradually increases, which not only improves the cable tensile strength and intermodulation performance of the connector, but also ensures the coaxiality of the connector and the cable. In addition, compared with the design of three same clamps, this design is more convenient for installation of the cable to be connected. During installation of the cable, the resistance will not be greatly increased, and it is less prone to causing damage to the clamp or deformation of the conductor in the cable.

In further examples, the first step surface 25 can still be designed to be parallel to the central axis of the connector, at least one mounting groove 27 in the first step surface 25 can be designed to have the same width with the depth gradually increasing from front to rear, so that the diameters of the C-shaped open clamps 28 placed in the mounting grooves 27 in sequence from front to rear gradually increases. For example, in some examples, the first step surface 25 is configured to be parallel to the axis of the connector. The first step surface 25 is provided with three mounting grooves 27, which are a first mounting groove, a second mounting groove and a third mounting groove from the front to the rear, respectively. The three mounting grooves are of the same width. The depths of the three mounting grooves increase in sequence from front to rear. A C-shaped open clamp 28 is arranged in each mounting groove 27, and the three C-shaped open clamps are a first C-shaped open clamp, a second C-shaped open clamp, and a third C-shaped open clamp from the front to the rear, respectively. Depths of the first mounting groove, the second mounting groove, and the third mounting groove successively increase. Outer diameters of the corresponding first C-shaped open clamp, the second C-shaped open clamp and the third C-shaped open clamp successively increase.

In such a clamp design, on one hand, the first C-shaped open clamp is clamped in the first trough at the foremost end of the connected cable, and the first C-shaped open clamp and the first conical surface 16 matches with each other to tightly compress the outer conductor of the cable to be connected. On the other hand, the second C-shaped open clamp and the third C-shaped open clamp are further respectively clamped in the trough of the outer conductor of the cable, or the rearmost third C-shaped open clamp wraps around the cable protecting sleeve. On one hand, it helps to strengthen the fixation of the outer conductor of the cable, improve the connector's ability to resist stretching of the cable, and improve intermodulation performance. On the other hand, compared with the design of three same clamps, this design is more convenient to install the cable to be connected. During installation of the cable, the resistance will not be greatly increased, thereby avoiding damage to the clamp or deformation of the inner conductor of the cable, and ensuring the coaxiality of the connector and the cable.

For other contents of this example 2, please refer to the description in example 1, which will not be detailed here.

### Example 3

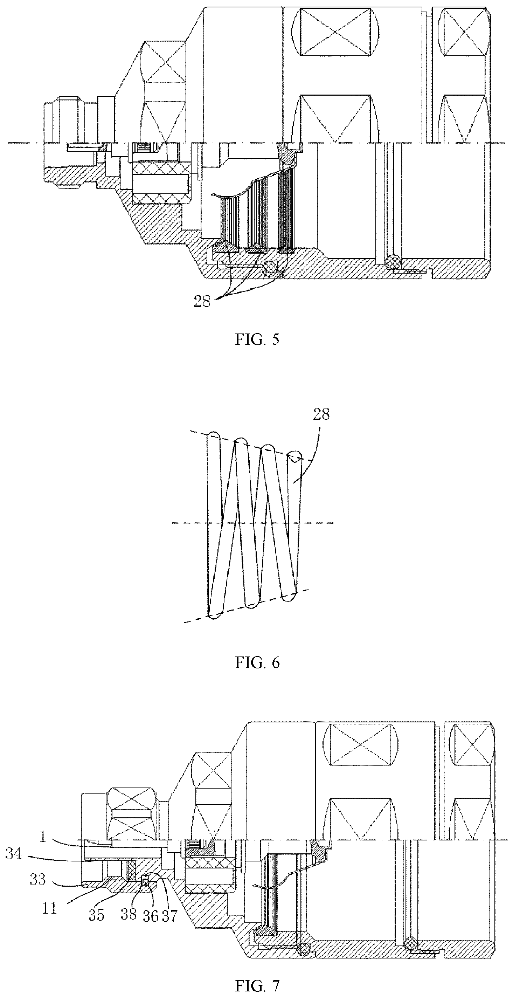

Compared with example 1, in this example 3, in order to improve the electrical and mechanical properties of the connector after the cable is connected to the connector, further improvements are made to the C-shaped open clamp 28 and the installation structure. As shown in FIG. 5, in this example, the first step surface 25 is still designed to be parallel to the axis of the connector, and at least one mounting groove 27 on the first step surface 25 can be designed to have a gradually decreased internal volume, so that the outer diameters of the C-shaped open clamps 28 placed in the mounting grooves 27 in sequence from front to rear remain unchanged, but the volumes thereof gradually decreases. For example, in some examples, the first step surface 25 is provided to be parallel to the axis of the connector, and the first step surface 25 is provided with three mounting grooves 27, which are a first mounting groove, a second mounting groove and a third mounting groove from the front to the rear, respectively. The volumes of the three mounting grooves gradually decrease. A C-shaped open clamp 28 is arranged in each mounting groove 27, and the three C-shaped open clamps are the first C-shaped open clamp, the second C-shaped open clamp and the third C-shaped open clamp from front to rear, respectively. The volumes of the first mounting groove, the second mounting groove and the third mounting groove decrease successively, and the volumes of the corresponding first C-shaped open clamp, the second C-shaped open clamp and the third C-shaped open clamp successively decrease.

With such a clamp design, on one hand, the first C-shaped open clamp is clamped in the first trough at the frontmost end of the connected cable, and the first C-shaped open clamp and the first conical surface 16 matches with each other to tightly compress the outer conductor of the cable to be connected. On the other hand, the second C-shaped open clamp and the third C-shaped open clamp are further respectively clamped in the trough of the outer conductor of the cable, or the rearmost third C-shaped open clamp wraps around the cable protecting sleeve. On one hand, it helps to strengthen the fixation of the outer conductor of the cable, improve the connector's ability to resist stretching of the cable, and improve intermodulation performance. On the other hand, compared with the design of three same clamps, this design is more convenient to install the cable to be connected. During installation of the cable, the resistance will not be greatly increased, thereby avoiding damage to the clamp or deformation of the inner conductor of the cable, and ensuring the coaxiality of the connector and the cable.

For other contents of this example 3, please refer to the description in example 1, which will not be detailed here.

### Example 4

Compared with example 1, in this example 4, in order to improve the electrical and mechanical properties of the connector after the cable is connected to the connector, further improvements are made to the C-shaped open clamp 28 and the installation structure. As shown in FIG. 6, the C-shaped open clamp 28 is in a conical and spiral shape. The first step surface 25 of the second outer conductor 4 is configured as an inclined surface which is higher at front and lower at rear. The first step surface 25 is provided with a mounting groove 27 that is spiral and continuous. The mounting grooves 27 are of the same width and depth. The C-shaped open clamp 28 in a conical and spiral shape is mounted in the mounting groove 27 that is spiral and continuous. The positions of the mounting grooves 27 are gradually away from the central axis of the connector in front-to-rear direction, and the outer diameters of the corresponding C-shaped open clamps 28 gradually increases from front to rear, showing an enlarged conical shape.

For example, in this example, there are three C-shaped open clamps 28 that are gradually enlarged from the front to the rear. The first clamp is clamped in the trough at the frontmost end of the cable, which plays a role in fixing the cable and ensures bearing against the conical surface of the outer conductor of the connector. The second clamp is clamped in the trough of the cable to wrap around the cable peak, increase the contact area between the connector and the outer conductor of the cable and improve the intermodulation performance. The third clamp is still clamped in the trough of cable, wraps around the cable peak, increases the tensile strength, or wraps around the cable protective sleeve to increase friction and improve the connector's ability to resist stretching of the cable. Outer diameters of the three clamps gradually increase, which on one hand helps to strengthen the fixation of the outer conductor of the cable, improve the connector's ability to resist stretching of the cable and improve intermodulation performance. On the other hand, compared with design of the same diameter, this design is more convenient to install the cable to be connected. During installation of the cable, the resistance will not be greatly increased, thereby avoiding damage to the clamp or deformation of the conductors in the cable, and ensuring the coaxiality of the connector and the cable.

For other contents of this example 4, please refer to the description in example 1, which will not be detailed here.

### Example 5

Example 5 provides a N-type RF coaxial pin connector of N-type. As shown in FIG. 7, the difference between example 5 and example 1 is that the front end is a N-type pin structure. Specifically, the front end of the first inner conductor 1 is a pin, and a threaded sleeve 33 arranged on the outer wall of the front end of the first outer conductor 3 is further included. The inner side of the threaded sleeve 33 is provided with a threaded area 11. Specifically, the front end of the first outer conductor 3 is provided with a step-shaped protrusion 34 surrounding the pin at the front end of the first inner conductor 1. A sealing gasket 35 is also arranged between the threaded sleeve 33 and the first outer conductor 3. The sealing gasket 35 is located between the threaded sleeve 33 and the outer step of the step-shaped protrusion 34 to exert a sealing function and prevent rainwater from penetrating into the internal space of the connector. In addition, the sealing gasket 35 has a larger area than an ordinary sealing ring, and will not easily flip during the installation of the cable like the sealing ring, so that good sealing performance can be maintained. When this connector is connected to the connection end of another connector, the joint of another connector presses against the sealing gasket 35. After the male connector and the female connector are tightened, the sealing gasket 35 is deformed by force to play a waterproof role. A clamping ring 36 is arranged on the outer side of the first outer conductor 3. A first clamping ring groove 37 is provided in the outer wall of the first outer conductor 3 and a second clamping ring groove 38 is provided accordingly in the inner wall of the threaded sleeve 33. The first clamping ring groove 37 and the second clamping ring groove 38 are enclosed to form an installation space for the clamping ring 36. The threaded sleeve 33 is movably installed to the front end (here, the end of the inner conductor with the pin is the front end, and the following applies) of the first outer conductor 3 by the clamping ring 36. Through the arrangement of the clamping ring 36 on the outer conductor, the threaded sleeve 33 matches the clamping ring 36 via the second clamping groove 38, and thus is mounted on the outer wall of the first outer conductor 3, so the installation of the threaded sleeve 33 is facilitated. Other contents are the same as those in Example 1 and will not be detailed here.

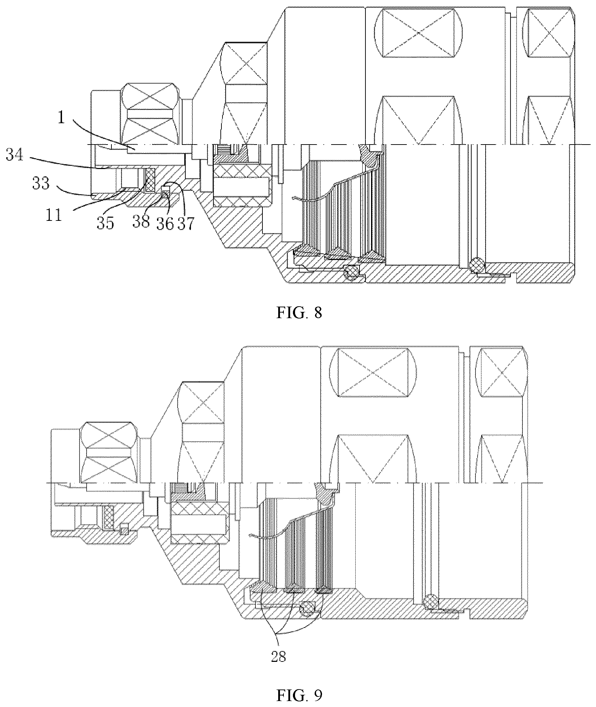

In some examples, as shown in FIG. 8, the design idea is the same as that of example 2. In order to improve the electrical and mechanical properties of the connector after the cable is connected to the connector, further improvements are made to the C-shaped open clamp 28 and the installation structure. For details, see example 2, which will not be described in detail here.

In some examples, the design can be that in examples 3-4, and further amendments are made to the C-shaped open clamp 28 and the installation structure by referring to Figs. 9 and 6. For details, see examples 3-4, which will not be described in detail here.

### Example 6

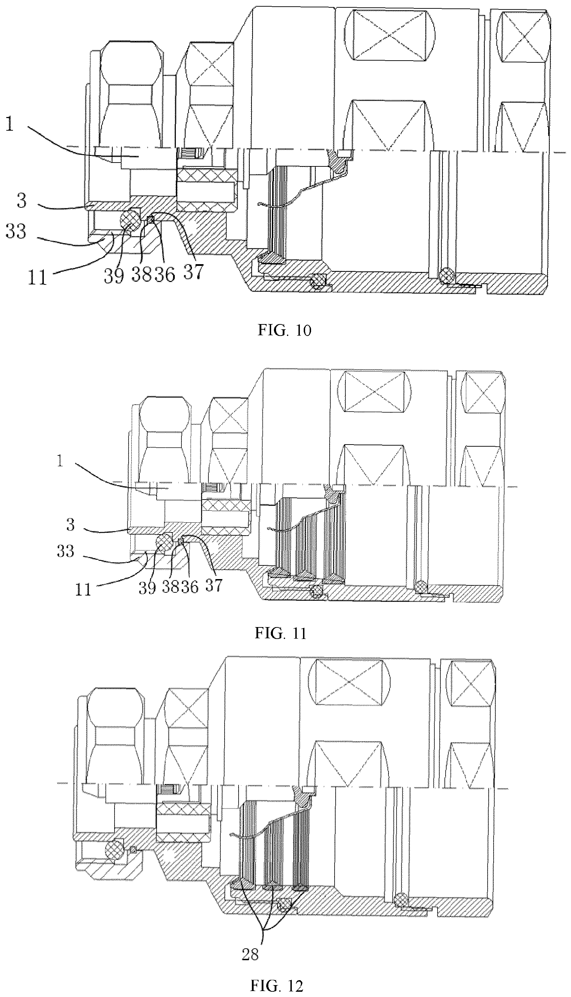

As shown in FIG. 10, example 6 provides a DIN-type RF coaxial pin connector. The difference between example 6 and example 1 is that, in example 6, the DIN type pin structure also includes a threaded sleeve 33 arranged on the outer wall of the front end of the first outer conductor 3. The inner side of the threaded sleeve 33 is provided with a threaded area 11. Specifically, a first clamping ring groove 37 is provided in the outer wall of the first outer conductor 3 and a second clamping ring groove 38 is provided accordingly in the inner wall of the threaded sleeve 33. The first clamping ring groove 37 and the second clamping ring groove 38 are enclosed to form an installation space for the clamping ring 36. The threaded sleeve 33 is movably installed to the front end (here, the end of the inner conductor with the pin is the front end, and the following applies) of the first outer conductor 3 by the clamping ring 36. Through the arrangement of the clamping ring 36 on the outer conductor, the threaded sleeve 33 and the clamping ring 36 matches with each other via the second clamping groove 38 and are mounted on the outer wall of the first outer conductor 3, so the installation of the threaded sleeve 33 is facilitated. In addition, a third seal 39 is arranged between the first outer conductor 3 and the threaded sleeve 33. When this connector is connected to the connection end of another connector, the joint of another connector presses against the third seal 39. After the male connector and the female connector are tightened, the third seal 39 is deformed by force to play a waterproof role. Other contents are the same as those in Example 1 and will not be detailed here.

In some examples, as shown in FIG. 11, the design idea is the same as that of example 2. In order to improve the electrical and mechanical properties of the connector after the cable is connected to the connector, further improvements are made to the C-shaped open clamp 28 and the installation structure. For details, see example 2, which will not be described in detail here.

In some examples, the design can be that in examples 3-4, and further improvements are made to the C-shaped open clamp 28 and the installation structure by referring to Figs. 12 and 6. For details, see examples 3-4, which will not be described in detail here.

Examples of the present application are described in detail above. Specific examples are used in this application to illustrate the principles and embodiments of the present application. The description of the above examples is only used to help understand the method and core ideas of the present application. At the same time, for those skilled in the art, according to the ideas of the present application, there will be changes in the specific embodiments and application scope. In summary, the content of this specification should not be deemed as a limitation on the present application.

## Claims

1. A radio-frequency coaxial connector, comprising a first inner conductor, a second inner conductor, an insulator, a first outer conductor, a second outer conductor and a cable fixing sleeve installed at a rear end of the second outer conductor, wherein, the first inner conductor and the second inner conductor are both arranged on a central axis of the connector, a rear end of the first inner conductor is fixedly connected to a front end of the second inner conductor; the insulator is arranged between the first outer conductor and the second inner conductor; a front end of the second outer conductor can be fixedly connected to an inner side of a rear end of the first outer conductor, a front end of the cable fixing sleeve can be fixedly connected to the inner side of the rear end of the second outer conductor; wherein an inner wall of the second outer conductor includes a first step surface; the first step surface is an inclined surface which is higher at the front and lower at the rear, and is provided with at least two mounting grooves; the at least two mounting grooves have the same width and depth, and a clamp is arranged in each mounting groove; the positions of the at least two mounting grooves are successively away from the central axis of the connector along front-to-rear direction, and the outer diameters of the corresponding clamps successively increase from front to rear.

2. The radio-frequency coaxial connector according to claim 1, **characterized in that**, straight knurling is circumferentially provided on an outer side of the rear end of the first inner conductor, the front end of the second inner conductor is provided with a first fixing hole, and the rear end of the first inner conductor is arranged in the first fixing hole by interference fit.

3. The radio-frequency coaxial connector according to claim 1, **characterized in that**, the rear end of the second inner conductor is fixed with an elastic claw wrapping around the rear end of the second inner conductor, the outer diameter of the front end of the elastic claw is bigger than that of the rear end of the elastic claw; the elastic claw comprises a fixing portion and a plurality of elastic portions which are fixedly connected, the fixing portion is fixed to the rear end of the second inner conductor by upset riveting, the plurality of elastic portions are arranged at equal intervals along the circumference of the fixing portion; the elastic portion comprises a first elastic segment and a second elastic segment, one end of the first elastic segment is connected to the fixing portion, the other end of the first elastic segment is arranged to be inclined toward the outside of the central axis of the connector and connected to the second elastic segment, the first elastic segments of the plurality of elastic portions form a first conical surface along the circumference of the fixing portion; the second elastic segment has an arc shape that bends first to the outside and then to the inside in the direction away from the first elastic segment.

4. The radio-frequency coaxial connector according to claim 1, **characterized in that**, a through hole that matches the second inner conductor is provided in a center of the insulator, the second inner conductor is arranged in the through hole and in interference fit with the insulator, an outer side of the insulator is in interference fit with a step on an inner wall of the first outer conductor; the front side and the rear side of the insulator are both provided with several blind holes, the several blind holes on each side are distributed at equal interval along the circumference of the insulator and the blind holes on both sides are arranged in a staggered manner.

5. The radio-frequency coaxial connector according to claim 1, **characterized in that**, the clamp is a C-shaped open clamp, which includes an arc-shaped bottom surface, a second conical surface and a third conical surface which are inclined inwardly on both sides; a plurality of parallel circular grooves with a semicircular cross section are respectively provided on the second conical surface and the third conical surface along the circumference of the C-shaped open clamp.

6. The radio-frequency coaxial connector according to claim 1, **characterized in that**, a first step portion is provided on an outer wall of the second outer conductor at the rear end of the area where the outer wall is connected to the first outer conductor through threaded connection, the inner wall of the first outer conductor is correspondingly provided with a second step portion, a first seal is arranged in a space enclosed by the first step portion and the second step portion; a third step portion is provided on the inner side of the rear end of the second outer conductor, and a second seal is arranged at the third step portion.

7. The radio-frequency coaxial connector according to claim 1, **characterized in that**, a threaded area is provided on the outer wall of the front end of the first outer conductor, alternatively the outer wall of the front end of the first outer conductor is further provided with a threaded sleeve, the threaded sleeve is movably mounted to the front end of the first outer conductor through a clamping ring, and an inner side of the threaded sleeve is provided with a threaded area.

8. A radio-frequency coaxial connector, comprising a first inner conductor, a second inner conductor, an insulator, a first outer conductor, a second outer conductor and a cable fixing sleeve installed at a rear end of the second outer conductor, wherein, the first inner conductor and the second inner conductor are both arranged on a central axis of the connector, a rear end of the first inner conductor is fixedly connected to a front end of the second inner conductor; the insulator is arranged between the first outer conductor and the second inner conductor; the front end of the second outer conductor can be fixedly connected to an inner side of a rear end of the first outer conductor, a front end of the cable fixing sleeve can be fixedly connected to an inner side of the rear end of the second outer conductor; wherein, an inner wall of the second outer conductor includes a first step surface; the first step surface is parallel to the central axis of the connector and is provided with at least two mounting grooves, a clamp is arranged in each mounting groove; the at least two mounting grooves have the same width, the depths of the at least two mounting grooves successively increase in front-to-rear direction, and the outer diameters of the corresponding clamps successively increase from front to rear.

9. A radio-frequency coaxial connector, comprising a first inner conductor, a second inner conductor, an insulator, a first outer conductor, a second outer conductor and a cable fixing sleeve installed at a rear end of the second outer conductor, wherein, the first inner conductor and the second inner conductor are both arranged on a central axis of the connector, a rear end of the first inner conductor is fixedly connected to a front end of the second inner conductor; the insulator is arranged between the first outer conductor and the second inner conductor; a front end of the second outer conductor can be fixedly connected to an inner side of a rear end of the first outer conductor, a front end of the cable fixing sleeve can be fixedly connected to an inner side of the rear end of the second outer conductor; wherein, an inner wall of the second outer conductor includes a first step surface; the first step surface is parallel to the central axis of the connector and is provided with at least two mounting grooves, a clamp is arranged in each mounting groove; volumes of the at least two mounting grooves successively decrease in front-to-rear direction, and volumes of the corresponding clamps successively decrease in front-to-rear direction.

10. A radio-frequency coaxial connector, comprising a first inner conductor, a second inner conductor, an insulator, a first outer conductor, a second outer conductor and a cable fixing sleeve installed at a rear end of the second outer conductor, the first inner conductor and the second inner conductor are both arranged on a central axis of the connector, a rear end of the first inner conductor is fixedly connected to a front end of the second inner conductor; the insulator is arranged between the first outer conductor and the second inner conductor; a front end of the second outer conductor can be fixedly connected to an inner side of a rear end of the first outer conductor, a front end of the cable fixing sleeve can be fixedly connected to the inner side of the rear end of the second outer conductor; wherein an inner wall of the second outer conductor includes a first step surface; the first step surface is an inclined surface which is higher at the front and lower at the rear, and is provided mounting grooves spirally continuous along the inner wall of the second outer conductor; a conical and spiral clamp is arranged in the mounting groove; the mounting grooves are gradually away from the central axis of the connector in front-to-rear direction, the outer diameters of the corresponding clamps gradually increase in front-to-rear direction, representing an enlarged conical shape.
